# EUROPÄISCHE PATENTANMELDUNG

(11) **EP 3 501 885 A1**
(43) Veröffentlichungstag der Anmeldung: **26.06.2019**
(21) Anmeldenummer: 18020506.4
(22) Anmeldetag: 16.10.2018
(51) Int. Cl.: B60L 53/31, H02J 7/00, H02J 7/02, H02M 1/42, H02M 7/06

(54) **LEISTUNGSELEKTRONIKMODUL FÜR EINE LADESTATION SOWIE ENTSPRECHENDE LADESTATION UND STROMTANKSTELLE**

(30) Priorität: 19.12.2017 DE 102017130498
(71) Anmelder: Dr.Ing. h.c. F. Porsche Aktiengesellschaft, 70435 Stuttgart (DE)
(72) Erfinder: Hähre, Karsten, 67373 Dudenhofen (DE); Heyne, Raoul, 75446 Wiernsheim (DE); Metzger, Christian, 71732 Tamm (DE); Jankovic, Marija, 70499 Stuttgart (DE)

(57) **Zusammenfassung**

Die Erfindung stellt ein Leistungselektronikmodul für eine Ladestation mit den folgenden Merkmalen bereit: Das Leistungselektronikmodul (10) umfasst eine eingangsseitige Leistungsfaktorkorrekturfilterschaltung, einen Spannungszwischenkreis und einen ausgangsseitigen Gleichstromsteller; die Leistungsfaktorkorrekturfilterschaltung ist für Drehstrom dreiphasig (11) ausgeführt; jede Phase (11) weist mindestens einen hochspannungsseitigen Schalter und einen niederspannungsseitigen Schalter auf; und Dioden, die einen Stromrückfluss verhindern, sind verbaut.

Die Erfindung stellt ferner eine entsprechende Ladestation sowie eine Stromtankstelle bereit.

## Beschreibung

Die vorliegende Erfindung betrifft ein Leistungselektronikmodul für eine Ladestation. Die vorliegende Erfindung betrifft darüber hinaus eine entsprechende Ladestation sowie eine Stromtankstelle mit einer solchen Ladestation.

### Stand der Technik

Als Ladestation wird in der Elektrotechnik jedwede stationäre Vorrichtung oder elektrische Anlage bezeichnet, welche dazu dient, mobilen akkubetriebenen Geräten, Maschinen oder Kraftfahrzeugen durch einfaches Einstellen oder Einstecken Energie zuzuführen, ohne den Energiespeicher - etwa die Traktionsbatterie eines Elektroautos - zwangsläufig entnehmen zu müssen. Ladestationen für Elektroautos werden mitunter auch als "Stromtankstellen" bezeichnet und können mehrere Ladepunkte umfassen.

Bekannt sind hier insbesondere Gleichstrom-Schnellladesysteme (high performance charging, HPC) wie das in Europa verbreitete, sogenannte kombinierte Ladesystem (combined charging system, CCS). Beim gattungsmäßigen Gleichstromladen wird Gleichstrom aus der Ladesäule direkt in das Fahrzeug eingespeist und hierzu durch einen leistungsstarken Gleichrichter vom Stromnetz oder durch große Pufferakkumulatoren an z.B. Solartankstellen bereitgestellt. Im Fahrzeug befindet sich ein Batteriemanagementsystem, das mit der Ladesäule direkt oder indirekt kommuniziert, um die Stromstärke anzupassen oder bei Erreichung einer Kapazitätsgrenze den Vorgang zu beenden.

Die Leistungselektronik befindet sich hierbei üblicherweise in der Ladesäule. Da die Gleichstromanschlüsse der Ladesäule direkt mit entsprechenden Anschlüssen der Traktionsbatterie verbunden werden, lassen sich verlustarm hohe Ladeströme übertragen, was kurze Ladezeiten ermöglicht.

In den verschiedenen Ladestationen, die weltweit im Einsatz sind, werden die verschiedensten Topologien für die Leistungselektronik verwendet. Bekannt sind auch schon Ladestationen, die einen Energiespeicher in Form einer Batterie zusätzlich verwenden. Die meisten am Markt verfügbaren Ladestationen weisen eine interne galvanische Trennung auf, sodass auch die elektrische Schaltung der Leistungselektronik eine solche Trennung vorsehen muss. Gängige Ladesäulen verwenden hierbei Standardschaltungen mit B6- oder B12-Brücken und werden mit der herkömmlichen IGBT-Technik realisiert.

US2013088196A, DE102012203612A1, US2013334879A, US2012049794A, US2012199409A und US2015042159A betreffen Ladestationen für Elektro- oder Hybridfahrzeuge mit entsprechender Leistungselektronik auf der Grundlage eines Gleichstromstellers (DC/DC-Stellers) sowie - mit Ausnahme von US2012199409A - einer Leistungsfaktorkorrektur (*power factor correction,* PFC). Die Leistungselektronik gemäß US2013088196A, DE102012203612A1 und US2013334879A umfasst hierbei jeweils einen der Leistungsfaktorkorrektur zugeordneten Metall-Oxid-Halbleiter-Feldeffekttransistor (*metal-oxide-semiconductor field-effect transistor*, MOSFET) und im Falle von US2013088196A zudem einen Pulsweitengleichrichter. Beim DC/DC-Steller gemäß US2015042159A sind sowohl Hoch- als auch Niederspannungsseite einem MOSFET zugeordnet.

### Offenbarung der Erfindung

Die Erfindung stellt ein Leistungselektronikmodul für eine Ladestation, eine entsprechende Ladestation sowie eine entsprechende Stromtankstelle gemäß den unabhängigen Ansprüchen bereit.

Der erfindungsgemäße Ansatz fußt auf der Erkenntnis, dass es sehr viele verschiedene Wege gibt, eine Umrichter-Schaltung bzw. einen Umrichter-Aufbau in einer Ladestation vorzunehmen. Für gewöhnlich enthalten viele Schaltungen eine galvanische Trennung. Die elektrischen Schaltungen sind insofern wichtig, zumal sie einen Stromrückfluss und interne Schleifen verhindern müssen. Viele Lösungen haben sehr unterschiedliche Effizienzen.

Der Erfindung liegt demgegenüber die Zielsetzung zugrunde, eine elektrische Schaltung für ein Leistungselektronikmodul ohne galvanische Trennung aufzuzeigen.

Ein Vorzug dieser Lösung liegt in ihrer Kompaktheit, sodass eine erfindungsgemäße Ladestation die Sicht im Straßenverkehr möglichst wenig behindert. Dies wird durch den Einsatz einer sehr schnellen Umrichter-Topologie mit hoher Schaltfrequenz ermöglicht. Der Wirkungsgrad der vorgeschlagenen Leistungselektronik ist hierbei mit über 96 % vergleichsweise hoch.

Ein einzelnes Modul kann auf diese Weise eine Masse von unter 40 kg aufweisen. Diese Masse darf von einer Person (Wartungspersonal) gerade noch gehoben werden, was der vorgestellten Lösung eine besondere Wartungsfreundlichkeit verleiht.

Weitere vorteilhafte Ausgestaltungen der Erfindung sind in den abhängigen Patentansprüchen angegeben. So vermag der Einsatz von MOSFETs auf der Grundlage von Siliziumkarbid (*silicon carbide*, SiC) die Vorrichtung hinsichtlich Masse, Wirkungsgrad und Bauraum - etwa im Vergleich zu einer Ausführungsform auf der Basis entsprechender Bipolartransistoren mit isoliertem Gate (*insulated-gate bipolar transistors,* IGBTs) - weiter aufzuwerten.

Weitere vorteilhafte Ausgestaltungen der Erfindung sind der vollsymmetrische Aufbau des Moduls, der dadurch gegeben ist, dass der Neutralleiter beim AFC und Tiefsetzsteller der gleiche ist.

Weiter ist sehr zweckdienlich, dass der DC/DC-Tiefsetzsteller zweifach interleaved ausgeführt wird.

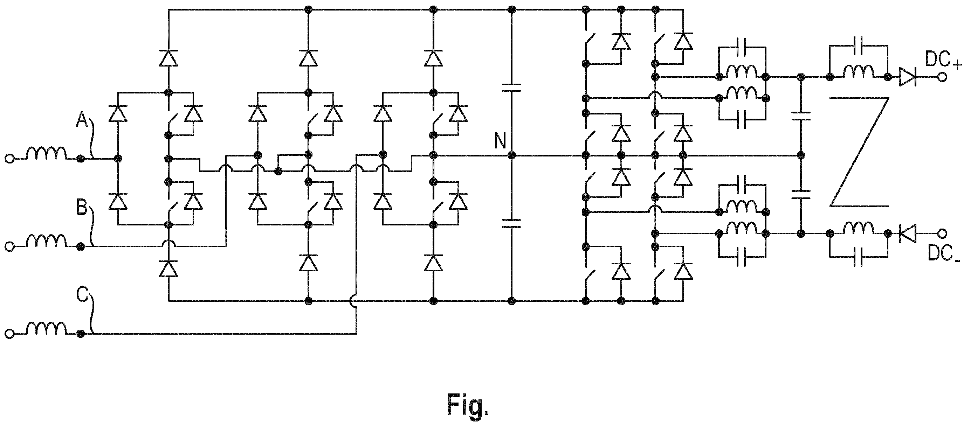

### Kurze Beschreibung der Zeichnung

Ein Ausführungsbeispiel der Erfindung ist in der Zeichnung dargestellt und wird im Folgenden näher beschrieben.

Die einzige Figur zeigt den Umrichter-Aufbau der Leistungselektronikmodule.

### Ausführungsformen der Erfindung

Das elektrische Schaltbild illustriert die mögliche Ausgestaltung eines erfindungsgemäßen Leistungselektronikmodules (10), an dessen Eingang eine aktive PFC vorgesehen ist. Diese ähnelt einem sogenannten Vienna-Gleichrichter gemäß EP0660498B1 mit dem Unterschied, dass es zwei MOSFETs gibt: einen für die Hochspannungsseite und einen für die Niederspannungsseite.

Das aktive Frontend mit Power Faktor Control (PFC) hat zusätzliche Dioden im Pfad (11), die einen Stromrückfluss verhindern. Diese sind auf Grund der nicht vorhandenen galvanischen Trennung, durch welche der Wirkungsgrad höher ist, erforderlich. Bzw. die verwendete Schaltung musste benutzt werden, weil nur sie für eine solche Anforderung zweckdienlich ist.

Nach einem Zwischenkreis folgt ein DC/DC-Steller, welcher am Ausgang in jedem Strompfad eine Diode aufweist, damit kein Strom in die falsche Richtung fließen kann. Diese Dioden sind vorteilhaft, da das Leistungselektronikmodul (10) keine galvanische Trennung aufweist.

## Patentansprüche

1. Leistungselektronikmodul (10) für eine Ladestation,
**gekennzeichnet durch** folgende Merkmale:
- das Leistungselektronikmodul (10) umfasst eine eingangsseitige Leistungsfaktorkorrekturschaltung, einen Spannungszwischenkreis und einen ausgangsseitigen Gleichstromsteller,
- die Leistungsfaktorkorrekturschaltung ist für Drehstrom dreiphasig (11) ausgeführt und
- jede Phase (11) weist mindestens einen hochspannungsseitigen Schalter und einen niederspannungsseitigen Schalter auf,
- und Dioden, die einen Stromrückfluss verhindern, sind verbaut.

2. Leistungselektronikmodul (10) nach Anspruch 1,
**gekennzeichnet durch** folgende Merkmale:
- der Gleichstromsteller umfasst in jedem Strompfad zusätzliche Dioden, die einen Stromrückfluss verhindern und eine Parallelschaltung der Leistungselektronikmodule ermöglicht,
- weiter umfasst er eine übereinstimmende Anzahl von Schaltern und Dioden mit einer gemeinsamen Sperrrichtung und
- jedem der Schalter ist schaltungstechnisch eine der Dioden zugeordnet.

3. Leistungselektronikmodul (10) nach Anspruch 1 oder 2,
**gekennzeichnet durch** folgendes Merkmal:
- das Leistungselektronikmodul ist vollsymmetrisch aufgebaut.
- Dazu haben das aktive Frontend und der Tiefsetzsteller einen gemeinsamen Neutralleiter.

4. Leistungselektronikmodul (10) nach Anspruch 1 bis 3,
**gekennzeichnet durch** folgendes Merkmal:
- der Tiefsetzsteller ist mehrphasig ausgeführt.

5. Leistungselektronikmodul (10) nach Anspruch 1 bis 4,
**gekennzeichnet durch** folgendes Merkmal:
- die Schalter sind elektronische Halbleiterbauelemente.

6. Leistungselektronikmodul (10) nach Anspruch 5,
**gekennzeichnet durch** folgendes Merkmal:
- die Halbleiterbauelemente sind Transistoren.

7. Leistungselektronikmodul (10) nach Anspruch 6,
**gekennzeichnet durch** folgendes Merkmal:
- die Transistoren sind Feldeffekttransistoren.

8. Leistungselektronikmodul (10) nach Anspruch 6,
**gekennzeichnet durch** folgendes Merkmal:
- die Transistoren sind Bipolartransistoren mit isoliertem Gate.

9. Leistungselektronikmodul (10) nach Anspruch 7,
**gekennzeichnet durch** folgendes Merkmal:
- das Transistormaterial besteht aus Siliziumkarbid.

10. Ladestation,
**gekennzeichnet durch** folgendes Merkmal:
- die Ladestation umfasst ein oder mehrere Leistungselektronikmodul/e (10) nach einem der Ansprüche 1 bis 9
- und wird von einem galvanisch isolierten Niederspannungsnetz gespeist.

11. Stromtankstelle,
**gekennzeichnet durch** folgendes Merkmal:
- die Stromtankstelle umfasst eine oder mehrere Ladestation/en nach Anspruch 10.
